(19) Europäisches Patentamt
European Patent Office
Office européen des brevets

(11) **EP 4 023 575 B1**

(12) **EUROPÄISCHE PATENTSCHRIFT**

(45) Veröffentlichungstag und Bekanntmachung des Hinweises auf die Patenterteilung:
**28.08.2024   Patentblatt 2024/35**

(21) Anmeldenummer: **21217008.8**

(22) Anmeldetag: **22.12.2021**

(51) Internationale Patentklassifikation (IPC):
**B65G 21/20** *(2006.01)*       **B65G 29/00** *(2006.01)*

(52) Gemeinsame Patentklassifikation (CPC):
**B65G 29/00; B65G 21/2054;** B65G 2201/0202

(54) **UMLENKEINRICHTUNG FÜR PRODUKTE**

STEERING DEVICE FOR PRODUCTS

DISPOSITIF DE DÉVIATION POUR PRODUITS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.12.2020   DE 102020135131**

(43) Veröffentlichungstag der Anmeldung:
**06.07.2022   Patentblatt 2022/27**

(73) Patentinhaber: **MULTIVAC Sepp Haggenmüller SE & Co. KG**
**87787 Wolfertschwenden (DE)**

(72) Erfinder: **FAUTER, Christian**
**87439 Kempten (DE)**

(74) Vertreter: **Grünecker Patent- und Rechtsanwälte PartG mbB**
**Leopoldstraße 4**
**80802 München (DE)**

(56) Entgegenhaltungen:
**DE-A1- 102004 060 640      DE-A1- 2 353 036**
**DE-A1- 2 611 354      GB-A- 1 444 929**
**US-B2- 8 297 434**

## Beschreibung

Die vorliegende Erfindung betrifft eine Umlenkeinrichtung für eine Transporteinrichtung zum Transportieren von Produkten nach Anspruch 1, sowie eine Transportstrecke zum Transportieren von Produkten nach Anspruch 10 und eine Verpackungsmaschine zum Verpacken von Produkten nach Anspruch 13 und ein Verfahren zum Verpacken von Produkten nach Anspruch 15.

## Stand der Technik

Transporteinrichtungen zum Transportieren von Produkten sind aus dem Stand der Technik bekannt. Diese umfassen üblicherweise Transportbänder, um Produkte, die ggf. keine feste Form oder Größe aufweisen (etwa Würste oder andere Lebensmittel) zu transportieren. Die Transportbänder sind dabei üblicherweise als einen oder mehrere angetriebene Riemen umfassend ausgestaltet. Dies erlaubt einen zuverlässigen Transport, erfordert jedoch zumeist, dass der Transport nur in gerader Linie erfolgt. Transportbänder, die eine gekrümmte Form aufweisen und die Produkte somit auf gekrümmten Bahnen transportieren können, sind zumeist teuer und erfordern aufgrund des erzielbaren Krümmungsradius viel Platz.

Die DE 2 353 036 A1 beschreibt ein Verbindungselement zwischen zwei Rollenförderern, wobei die Rollenförderer Werkstücke in unterschiedlicher Richtung fördern. Das Verbindungselement umfasst eine Stützeinrichtung, die im Wesentlichen auf einer kreisförmigen Bahn angeordnet ist und einen ersten Abschnitt eines Werkstücks unterstützt, sowie eine Mitnahmeeinrichtung für die Werkstücke, welche eine durch einen Motor angetriebene drehbare Scheibe enthält, auf welcher ein zweiter Abschnitt jedes der Werkstücke aufliegt und die Achse der drehbaren Scheibe im Wesentlichen mit dem Mittelpunkt der kreisförmigen Bahn zusammenfällt. Mit anderen Worten, die DE 2 353 036 A1 offenbart eine Umlenkeinrichtung für eine Transporteinrichtung zum Transportieren von Produkten, wobei die Umlenkeinrichtung ein erstes, um eine erste Drehachse drehbar gelagertes Element und ein zweites, um eine zweite Drehachse drehbar gelagertes Element umfasst, wobei die Drehachsen miteinander einen Winkel einschließen, wobei ein der Umlenkeinrichtung zugeführtes Produkt durch Drehung des ersten und zweiten Elements umgelenkt werden kann und die Umlenkeinrichtung verlassen kann.

Für die Konstruktion von Produktionsanlagen bewirkt dies Einschränkungen hinsichtlich der räumlichen Anordnung von Behandlungsmaschinen für die Produkte.

## Aufgabe

Ausgehend vom bekannten Stand der Technik besteht die zu lösende technische Aufgabe somit darin, eine Umlenkeinrichtung für eine Transporteinrichtung zum Transportieren von Produkten anzugeben, mit der ein zuverlässiges Umlenken von Produkten von einer ersten in eine zweite Transportrichtung bewirkt und gleichzeitig Platz eingespart werden kann.

Diese Aufgabe wird durch die Umlenkeinrichtung für eine Transporteinrichtung zum Transportieren von Produkten gemäß Anspruch 1, die Transportstrecke zum Transportieren von Produkten nach Anspruch 10, sowie die Verpackungsmaschine zum Verpacken von Produkten nach Anspruch 13 und das Verfahren zum Verpacken von Produkten nach Anspruch 15 gelöst. Vorteilhafte Weiterbildungen der Erfindung sind in den Unteransprüchen erfasst.

Die erfindungsgemäße Umlenkeinrichtung für eine Transporteinrichtung zum Transportieren von Produkten, umfasst ein erstes, um eine erste Drehachse drehbar gelagertes Element und ein zweites, um eine zweite Drehachse drehbar gelagertes Element, wobei die Drehachsen miteinander einen Winkel einschließen und das erste und das zweite Element in einem Bereich überlappen, sodass das erste und das zweite Element einen Umlenkbereich einschließen, wobei ein dem Umlenkbereich zugeführtes Produkt in dem Umlenkbereich durch Drehung des ersten und zweiten Elements umgelenkt werden kann und nach Passieren des Umlenkbereichs aufgrund der Massenträgheit die Umlenkeinrichtung verlassen kann.

Der Umlenkbereich ist hier als ein Bereich zu verstehen, in dem ein Umlenken der Produkte erfolgt, wobei sie von einer ersten Bewegungsrichtung (oder ersten Transportrichtung) aufgrund der Wechselwirkung mit wenigstens einem von dem ersten oder zweiten Element in eine zweite Bewegungsrichtung (oder zweite Transportrichtung), die einen Winkel mit der ersten Bewegungsrichtung einschließt, umgelenkt werden. Dies wird dadurch erreicht, dass die Produkte, während sie von dem ersten und/oder zweiten Element zumindest im Umlenkbereich zu einer der Drehung dieser Elemente folgenden Bewegung veranlasst werden, den Umlenkbereich nicht aufgrund ihrer Massenträgheit verlassen können, da der Umlenkbereich von dem ersten und dem zweiten Element aufgrund ihres Überlapps in diesem Bereich so eingeschlossen ist, dass Produkte den Umlenkbereich nicht verlassen können. Dadurch kann die bei der Bewegung entlang des Umlenkbereichs auf die Produkte einwirkende Zentripetalkraft ein Umlenken bewirken. Außerhalb und stromab des Umlenkbereichs überlappen dann das erste und zweite Element nicht mehr, sodass die Produkte aufgrund ihrer Massenträgheit der Drehung des ersten und zweiten Elements nicht mehr folgen und die Umlenkeinrichtung verlassen können.

Die Größe des Umlenkbereichs und damit auch der Umlenkwinkel zwischen der ersten Bewegungsrichtung und der zweiten Bewegungsrichtung der Produkte kann durch die Geometrie des ersten und zweiten Elements und/oder den zwischen den Drehachsen des ersten und zweiten Elements eingeschlossenen Winkel bestimmt sein.

Insbesondere schneiden sich die erste Drehachse und die zweite Drehachse (oder gedachte Verlängerungen dieser) in einem Punkt.

Mit dieser Umlenkeinrichtung kann ein zuverlässiges Umlenken von Produkten auf kleinem Raum realisiert werden, da auch bei hohen Transportgeschwindigkeiten und kleinem Abstand der Produkte zur Drehachse auf die Produkte einwirkende Kräfte kein Verlassen des Umlenkbereichs bewirken können. Hiermit kann zum einen Platz und zum anderen vorteilhaft auch Kosten für Transporteinrichtungen eingespart werden.

Es kann vorgesehen sein, dass das erste Element kreisscheibenförmig ist und das zweite Element eine innere, kegelstumpfförmige Oberfläche umfasst, wobei das erste Element in dem Umlenkbereich in die kegelstumpfförmige Oberfläche eingreift.

Die kegelstumpfförmige Oberfläche muss hier nicht exakt der Form eines Kegelstumpfs entsprechen. In einer alternativen Ausführungsform kann die Seitenfläche des Kegelstumpfs auch Wölbungen aufweisen oder mit der Grundfläche und/oder der Deckfläche keine Kanten bilden, sondern stetig in diese übergehen (etwa durch Kreissegment anstelle der Kanten). Beispielsweise kann die Seitenfläche und/oder die Deckfläche als eine Fläche ausgestaltet sein, die im Querschnitt parallel zur Symmetrieachse des Kegelstumpfes einen oder mehrere konkav gekrümmte und/oder konvex gekrümmte Abschnitte oder Elemente umfasst.

Das kreisscheibenförmige Element kann insbesondere so ausgestaltet sein, dass sein Durchmesser größer ist als die Höhe der Kreisscheibe. Beispielsweise kann der Durchmesser des kreisscheibenförmigen ersten Elements fünfmal größer sein als dessen Höhe. Ein kreisscheibenförmiges Element soll hier nicht nur solche Realisierungen umfassen, die keine innerhalb der Kreisscheibe liegende Öffnung umfassen. Umfasst sind auch Elemente, die etwa zum Hindurchführen einer Drehachse eine zentrale Öffnung aufweisen und/oder zusätzliche Öffnungen im Bereich der Kreisscheibe besitzen, um etwa deren Gewicht zu reduzieren. Auch eine Ausgestaltung exakt entsprechend einer Kreisscheibe ist hier nicht zwingend. So kann das kreisscheibenförmige Element auch Unregelmäßigkeiten auf seiner Oberfläche aufweisen, um etwa die Reibung zwischen er Oberfläche und einem Produkt zu erhöhen. Auch andere Abweichungen von der exakten Form einer Kreisscheibe sind hier denkbar, solang die grundsätzliche, die Form des ersten Elements charakterisierende Grundstruktur die einer Kreisscheibe oder einer Kreisscheibe ähnliche Form ist. Das kreisscheibenförmige erste Element kann an seiner Seitenfläche auch eine umlaufende Einkerbung oder Nut umfassen, in der Produkte transportiert werden können, wobei dann das zweite Element bevorzugt diese Nut umgreifen kann, sodass ein Umlenkbereich eingeschlossen wird.

Die kegelstumpfförmige innere Oberfläche des zweiten Elements kann bevorzugt so gebildet sein, dass der große und kleine Durchmesser des Kegelstumpfes größer sind als die Höhe des die innere Oberfläche bildenden Kegelstumpfes. Beispielsweise kann auch hier gelten, dass zumindest der größere Durchmesser oder sowohl der größere als auch der kleinere Durchmesser wenigstens fünfmal größer sind als die Höhe des Kegelstumpfes. Durch die Ausgestaltung des zweiten Elements mit einer inneren Oberfläche, die einen Kegelstumpf darstellt, kann ein zuverlässiges Einschließen des ersten Elements in Form einer Kreisscheibe realisiert werden, so dass Produkte den Umlenkbereich nicht unbeabsichtigt verlassen können und gleichzeitig eine zuverlässige Bewegung der Produkte durch den Umlenkbereich möglich ist.

Weiterhin kann vorgesehen sein, dass das erste Element zwei zueinander entlang der ersten Drehachse beabstandete, konzentrisch angeordnete, um die erste Drehachse drehbar gelagerte, kreisscheibenförmige Segmente umfasst, wobei ein Produkt zwischen den Segmenten aufgenommen und durch die Umlenkeinrichtung transportiert werden kann und wobei die kegelstumpfförmige Oberfläche des zweiten Elements die beiden Segmente im Umlenkbereich umschließt. Die zwei zueinander beabstandeten kreisscheibenförmigen Segmente müssen nicht zwingend separate Segmente sein. Sie können auch, etwa durch die gemeinsame Drehachse oder ein anderes Verbindungselement, miteinander verbunden sein. So kann das erste Element beispielsweise als ein Zylinder mit sich entlang der Deckfläche und entlang der Grundfläche des Zylinders erstreckenden kreisscheibenförmigen Segmenten (etwa im Sinne eines Elements mit Doppel-T-Querschnitt) ausgebildet sein.

Der Abstand der kreisscheibenförmigen Segmente kann insbesondere so gewählt sein, dass Produkte zwischen den kreisscheibenförmigen Segmenten transportiert werden können. In Verbindung mit der Ausgestaltung des zweiten Elements kann so ein zuverlässiger Transport von Produkten sichergestellt werden.

In einer Ausführungsform ist vorgesehen, dass ein Winkel zwischen der ersten Drehachse und einer Seitenfläche der inneren, kegelstumpfförmigen Oberfläche des zweiten Elements in zumindest einem Teilbereich des Umlenkbereichs zwischen 0° und 20°, bevorzugt zwischen 0° und 5° beträgt. Hierdurch wird ein Verkanten von Produkten etwa in einem Kontaktbereich oder in dem Überlappbereich zwischen dem ersten Element und dem zweiten Element möglichst vermieden, so dass auch bei hohen Rotationsgeschwindigkeiten ein zuverlässiger Transport von Produkten möglich ist.

In einer Ausführungsform wird das erste Element durch eine erste Antriebseinrichtung zur Drehung um die erste Drehachse angetrieben und das zweite Element wird durch eine von der ersten Antriebseinrichtung unabhängige, zweite Antriebseinrichtung zur Drehung um die zweite Drehachse angetrieben. Unabhängige Antriebe können so auch bei der vorliegenden Verkippung der Drehachsen zuverlässig die Bewegung des ersten Elements und des zweiten Elements realisieren. Außerdem kann so eine Abstimmung der Winkelgeschwindigkeiten des ersten Elements und des zweiten Elements zuverlässig erfolgen.

Alternativ kann vorgesehen sein, dass das erste Element und das zweite Element durch eine gemeinsame Antriebseinrichtung zur Drehung um die ersten und die zweite Drehachse angetrieben werden. Dies kann die Komplexität der Dreheinrichtung reduzieren.

Insbesondere kann vorgesehen sein, dass die erste Antriebseinrichtung und die zweite Antriebseinrichtung das erste Element und das zweite Element mit gleicher Drehzahl antreiben können. Durch die gleiche Drehzahl wird sichergestellt, dass die mit der Umlenkeinrichtung transportierten Produkte keine oder nur geringe unerwünschten Drehmomente erfahren und dadurch etwa Fehlstellungen beim Transport durch die Umlenkeinrichtung einnehmen.

Diese Ausgestaltung ist konstruktiv einfacher für die Verwendung von zwei unabhängigen Antriebseinrichtungen und kann so die Komplexität der Umlenkeinrichtung und ihre Fehleranfälligkeit vorteilhaft reduzieren.

In einer Ausführungsform ist vorgesehen, dass das erste Element und/oder das zweite Element eine mit Produkt in Kontakt kommende Oberfläche aus Edelstahl umfassen. Verunreinigungen oder unbeabsichtigte Kontaminationen der Produkte können so vermieden werden.

Es kann weiterhin vorgesehen sein, dass der von dem ersten Element und dem zweiten Element eingeschlossene Umlenkbereich so ausgestaltet ist, dass ein Produkt, das in den Umlenkbereich entlang einer Zuführrichtung eintritt, den Umlenkbereich in einer Abführrichtung verlässt, wobei ein Winkel zwischen der Zuführrichtung und der Abführrichtung zwischen 45° und 135°, oder zwischen 60° und 120°, oder zwischen 85° und 95° beträgt.

Der Winkel zwischen der Zuführrichtung und der Abführrichtung kann dabei durch den Winkel, den die Drehachsen des ersten Elements und des zweiten Elements miteinander einschließen, vorteilhaft eingestellt werden. Je kleiner dieser Winkel ist, desto größer ist der Winkel zwischen der Zuführrichtung und der Abführrichtung. Dieser Winkel kann auch variabel einstellbar sein, so dass dieselbe Umlenkeinrichtung auch in verschiedenen Ausgestaltungen und/oder Anordnungen von Transporteinrichtungen zum Einsatz kommen kann und der entsprechende Winkel zwischen der Abführrichtung und der Zuführrichtung je nach Notwendigkeit eingestellt werden kann.

Erfindungsgemäß kann weiterhin eine Transportstrecke zum Transportieren von Produkten vorgesehen sein, wobei die Transportstrecke eine erste Transporteinrichtung zum Transportieren von Produkten entlang einer ersten Transportrichtung, eine zweite Transporteinrichtung zum Transportieren von Produkten entlang einer zweiten Transportrichtung und eine zwischen der ersten und der zweiten Transporteinrichtung angeordnete Umlenkeinrichtung nach einer der vorangegangenen Ausführungsformen umfasst, wobei die erste Transporteinrichtung Produkte der Umlenkeinrichtung zuführen kann und die Umlenkeinrichtung Produkte von der ersten Transportrichtung in die zweite Transportrichtung umlenken und der zweiten Transporteinrichtung zuführen kann. Diese Transportstrecke kann kompakter ausgeführt werden, so dass Platz in der Produktionsanlage eingespart werden kann.

Dabei kann vorgesehen sein, dass die erste und/oder die zweite Transporteinrichtung ein V-förmiges Transportband umfasst. V-förmige Transportbänder werden üblicherweise für Produkte verwendet, die keine fest vorgegebene Form oder zumindest nicht alle dieselbe Form aufweisen und ggf. in ihrer Form flexibel sind, wie etwa Würste. Mit dieser Ausführungsform wird ein zuverlässiger Transport zu und/oder von der Umlenkeinrichtung weg bewirkt.

In einer weiteren Ausführungsform kann vorgesehen sein, dass die zweite Transporteinrichtung einen sich entlang der zweiten Transportrichtung erstreckenden Gleitbereich zum Aufnehmen von Produkten aus der Umlenkeinrichtung und ein Fächerband stromab des Gleitbereichs umfasst, wobei Produkte von dem Gleitbereich in das Fächerband gelangen und in dem Fächerband entlang einer dritten Transportrichtung transportiert werden können. In dem Fächerband können die Produkte beispielsweise in geeignete Aufnahmemulden des Fächerbandes abgelegt und dann weiter transportiert werden. Die dritte Transportrichtung kann mit der zweiten Transportrichtung einen Winkel ungleich Null einschließen, insbesondere quer zur zweiten Transportrichtung verlaufen.

Erfindungsgemäß ist weiterhin eine Verpackungsanlage zum Verpacken von Produkten, wobei die Verpackungsanlage eine Behandlungsmaschine für Produkte und eine Verpackungsmaschine zum Verpacken von Produkten und eine Transportstrecke nach einer der vorangegangenen Ausführungsformen stromab der Behandlungsmaschine und stromauf der Verpackungsmaschine umfasst. Richtungen stromab sind dabei in Richtung der Transportrichtung der Produkte, Richtungen stromauf entsprechend entgegen der Transportrichtung zu verstehen. Diese Ausführungsform realisiert eine Verpackungsanlage mit reduziertem Platzbedarf für die Transportstrecken zwischen benachbarten Maschinen, insbesondere der Behandlungsmaschine und der Verpackungsmaschine.

Es kann vorgesehen sein, dass die Behandlungsmaschine eine Zentrifuge ist oder diese umfasst. Zentrifugen kommen hier etwa zum Vereinzeln von Produkten wie Würsten in Betracht. Mit dieser Ausgestaltung wird die Verpackungsanlage zur speziellen Verwendung in der Lebensmittelindustrie ausgelegt.

Erfindungsgemäß ist weiterhin ein Verfahren zum Transportieren von Produkten, wobei die Produkte von einer ersten Transportrichtung in eine zweite Transportrichtung mittels einer Umlenkeinrichtung nach einer der vorangegangenen Ausführungsformen umgelenkt werden. Dieses Verfahren realisiert einen effektiven Transport von Produkten mit verkürzten Transportwegen.

**Kurze Beschreibung der Figuren**

Fig. 1        zeigt eine schematische Ansicht einer Umlenkeinrichtung gemäß einer Ausführungsform in Verbindung mit Transporteinrichtungen;

Fig. 2a u. 2b        zeigen eine Draufsicht und eine Seitenansicht einer Umlenkeinrichtung gemäß einer Ausführungsform;

Fig. 3a - 3c        zeigen verschiedene relative Anordnungen des ersten Elements und des zweiten Elements zueinander gemäß einer Ausführungsform;

Fig. 4        zeigt eine Ausführungsform einer Verpackungsanlage.;

Fig. 5        zeigt eine zur Fig. 4 alternative Ausführungsform einer Verpackungsanlage.

**Ausführliche Beschreibung**

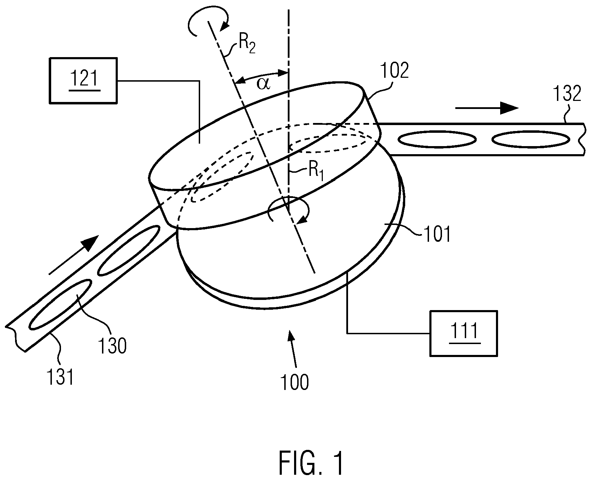

Fig. 1 zeigt eine Umlenkeinrichtung 100 gemäß einer Ausführungsform in Verbindung mit einer der Umlenkeinrichtung in Transportrichtung stromaufwärts angeordneten ersten Transportreinrichtung 131 sowie einer stromabwärts der Umlenkeinrichtung 100 angeordneten zweiten Transporteinrichtung 132. Diese Einrichtungen 100, 131 und 132 können gemeinsam als Transportstrecke angesehen werden. Sämtliche in Bezug auf die Umlenkeinrichtung im Folgenden genannten Ausführungsformen sind auch auf eine entsprechende Transportstrecke anwendbar.

Die Umlenkeinrichtung 100 gemäß Ausführungsformen der Erfindung ist dazu ausgestaltet und angeordnet, Produkte 130, die ihr etwa aus der ersten Transporteinrichtung 131 zugeführt werden, in ihrer Bewegungsrichtung umzulenken und der zweiten Transporteinrichtung 132, deren Transportrichtung sich von der Transportrichtung der ersten Transporteinrichtung 131 unterscheiden kann, zuzuführen.

Die Transporteinrichtungen 131, 132 können als Transportbänder ausgebildet sein. Insbesondere kann eine der Transporteinrichtungen 131, 132 oder auch beide als V-förmiges Transportband ausgebildet sein, das zwei in einem spitzen Winkel zueinander angeordnete Transportbänder umfasst, wobei in der so gebildeten Mulde zwischen diesen Transportbändern Produkte 130 transportiert werden können. Bei den Produkten 130 kann, muss es sich jedoch nicht, um Lebensmittel wie beispielweise Würste handeln. Auch Verpackungen (leer oder befüllt) können transportiert werden. Hinsichtlich der mit der Umlenkeinrichtung und/oder den Transporteinrichtungen beförderten Produkten ist die Erfindung jedoch grundsätzlich nicht beschränkt.

Um die entlang der ersten Transportrichtung in der Transporteinrichtung 131 transportierten Produkte 130 in ihrer Bewegungsrichtung umzulenken, umfasst die Umlenkeinrichtung 100 ein erstes Element 101, das um eine Drehachse $R_1$ drehbar gelagert ist. Die Drehrichtung ist dabei bevorzugt so gewählt, dass die Produkte ihre Bewegung bei der Übergabe von der Transporteinrichtung 131 in die Umlenkeinrichtung 100 fortsetzen.

Weiterhin umfasst die Umlenkeinrichtung 100 ein zweites, um eine zweite Drehachse $R_2$ drehbares Element, das mit dem ersten Element in einem Bereich überlappt, so dass in diesem Bereich transportierte Produkte 130 nicht aufgrund ihrer Massenträgheit aus dem Bereich hinaus gelangen können. Dieser Bereich wird auch als Umlenkbereich bezeichnet.

Die Produkte 130 folgen in dem Umlenkbereich der Drehung des ersten Elements 101 bzw. des zweiten Elements 102 um die jeweilige Drehachse, da sie aufgrund der auf sie einwirkenden Zentripetalkraft auf eine Kreisbahn gezwungen werden.

In Drehrichtung des ersten Elements und des zweiten Elements nach dem Umlenkbereich überlappen das erste Element 101 und das zweite Element 102 nicht mehr, so dass die Produkte aufgrund ihrer Massenträgheit den Umlenkbereich und insbesondere die Umlenkeinrichtung verlassen können und in die Transportrichtung 132 gelangen.

Dabei kann insbesondere die Größe des Umlenkbereichs so gewählt sein, dass Produkte vor dem Umlenkbereich dem Element 101 übergeben werden können, dann in den Umlenkbereich eindringen und umgelenkt werden, um anschließend den Umlenkbereich in einer Richtung zu verlassen, die mit der Transportrichtung der Transporteinrichtung 132 zusammenfällt. Besonders bevorzugt kann eine Tangente an die äußere Oberfläche das erste Elements 101 am Ende des Umlenkbereichs parallel zu der Transportrichtung der Transporteinrichtung 132 sein. Da die Tangente parallel oder gleich der Bewegungsrichtung der Produkte aufgrund ihrer Massenträgheit ist, wird so sichergestellt, dass die Produkte die Umlenkeinrichtung mit einer Bewegungsrichtung verlassen, die der Transportrichtung der nachgeordneten oder stromab angeordneten Transportrichtung 132 entspricht.

Um einen Umlenkbereich zu realisieren, der sich nicht um die gesamte Umlenkeinrichtung erstreckt, ist vorgesehen, dass die erste Rotationsachse $R_1$ des ersten Elements 101 und die zweite Rotationsachse $R_2$ des zweiten Elements 102 einen Winkel $\alpha$ miteinander einschließen und insbesondere nicht parallel zueinander sind.

Bei einer im Wesentlichen kreisscheibenförmigen Ausgestaltung des ersten Elements 101 und einer im Wesentlichen zylindrischen Ausgestaltung des zweiten Elements 102, das bevorzugt im Umlenkbereich um das erste Element 101 umgreift, bewirkt dies, dass der Umlenkbereich sich nur über einen Teilbereich des Umfangs des ersten Elements und des zweiten Elements erstreckt. Die Größe des Umlenkbereichs hängt dabei von dem von der ersten Drehachse $R_1$ und der zweiten Drehachse $R_2$ eingeschlossenen Winkel ab.

Um die Drehung des ersten Elements 101 um die Drehachse $R_1$ und des zweiten Elements 102 um die Drehachse $R_2$ zu realisieren, kann jedem der Elemente eine separate Antriebseinrichtung zugeordnet sein. In der Ansicht der Fig. 1 ist dem Element 101 die Antriebseinrichtung 111 zugeordnet und dem Element 102 ist die Antriebseinrichtung 112 zugeordnet. Bei diesen Antriebseinrichtungen kann es sich um voneinander unabhängig betätigbare und/oder ansteuerbare Elektromotoren handeln. Insbesondere können Servomotoren zum Einsatz kommen.

Dabei kann zweckmäßig vorgesehen sein, dass die Antriebseinrichtungen 111, 112 zwar unabhängig voneinander ansteuerbar sind, aber so angesteuert werden können, dass die Drehzahl des ersten Elements und die Drehzahl des zweiten Elements übereinstimmen. Besonders bevorzugt kann vorgesehen sein, dass die Winkelgeschwindigkeiten des ersten Elements und des zweiten Elements gleich sind. Alternativ oder zusätzlich kann vorgesehen sein, dass die Tangentialgeschwindigkeiten des ersten Elements und des zweiten Elements in einem Bereich, in dem zwischen dem ersten Element und dem zweiten Element ein Produkt transportiert wird, das dabei mit dem ersten Element und dem zweiten Element in Berührung kommt, im Wesentlichen gleich sind. Dadurch wird gewährleistet, dass Produkte, die mit dem ersten Element 101 und dem zweiten Element 102 in Berührung kommen, keine unterschiedlichen auf sie einwirkenden Drehmomente erfahren, was zu unerwünschter Bewegung der Produkte führen könnte.

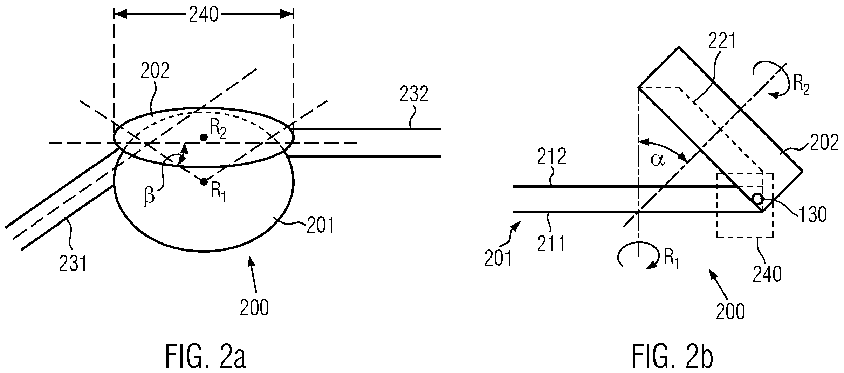

Fig. 2a und 2b zeigen eine Draufsicht und eine Seitenansicht der Umlenkeinrichtung aus Fig. 1 gemäß einer Ausführungsform.

In Fig. 2a ist der Bereich 240 dargestellt, in dem das erste Element 201 und das zweite Element 202 derart überlappen, dass ein Produkt bei einer Entlangbewegung in dem so gebildeten Überlappbereich, der auch als Umlenkbereich 240 bezeichnet wird, diesen Bereich nicht in radialer Richtung (gesehen von der Rotationsachse $R_1$ oder der Rotationsachse $R_2$ aus) verlassen kann, da eine solche radiale Bewegung eines Produkts durch den Überlapp des ersten und des zweiten Elements zumindest in radialer Richtung blockiert wird.

In Transportrichtung der Produkte durch die Umlenkeinrichtung 200 befindet sich stromauf und bevorzugt unmittelbar vor dem Umlenkbereich ein Übergabepunkt, an dem die Transporteinrichtung 231 Produkte der Umlenkeinrichtung 200 zuführen kann. Diese können etwa mittels hoher Transportgeschwindigkeit in einem Transportband der Transporteinrichtung 231 in den Umlenkbereich geschossen werden. Da ein Verlassen des Umlenkbereichs aufgrund des Überlapps des ersten und zweiten Elements nicht möglich ist, kann es hierdurch nicht zu einem Entweichen der Produkte kommen.

Bevorzugt ist vorgesehen, dass die Transportgeschwindigkeit der Produkte in der ersten Transporteinrichtung 231 der Tangentialgeschwindigkeit der Produkte im Umlenkbereich der Umlenkeinrichtung 200 entspricht und auch die Transportgeschwindigkeit der Produkte in der nachfolgenden Transporteinrichtung 232 dieselbe Geschwindigkeit aufweist. Dies ist jedoch nicht zwingend. Bevorzugt kann die Transportgeschwindigkeit in der stromab nachfolgenden Einrichtung jeweils größer sein als in der vorherigen, sodass kein Abbremsen und damit eventuelles Kollidieren von Produkten erfolgt.

In der Fig. 2b ist eine Seitenansicht der Umlenkeinrichtung ohne die weiteren Transporteinrichtungen aus der Fig. 2a gezeigt. In der hier dargestellten Ausführungsform umfasst das erste Element 201 zwei zueinander beabstandete kreisförmige bzw. kreisscheibenförmige Segmente 211, 212, zwischen denen, wie hier gezeigt, ein Produkt 230 aufgenommen werden kann, um durch die Umlenkeinrichtung transportiert zu werden. Diese Ausgestaltung ist nicht zwingend. Es kann auch vorgesehen sein, dass das erste Element 201 lediglich als ein kreisscheibenförmiges Segment umfassend ausgebildet ist. Zwar sind die kreisscheibenförmigen Segmente bevorzugt beabstandet. Dies soll aber auch umfassen, dass die kreisscheibenförmigen Segmente physisch miteinander verbunden sein können, etwa durch ein sich um die Drehachse erstreckendes Verbindungselement oder die Drehachse selbst.

Die zwei Kreissegmente 211 und 212 sind zueinander konzentrisch mit einem Abstand zueinander angeordnet und um die gemeinsame Drehachse $R_1$ drehbar gelagert. Der Antrieb der beiden Kreisscheibensegmente kann etwa über die gemeinsamen Antriebseinrichtung 111, wie sie in Fig. 1 gezeigt ist, bewirkt werden. Alternativ ist es auch möglich, beide Segmente 211, 212 unabhängig voneinander mit separaten Antriebseinrichtungen anzutreiben.

In der hier dargestellten Ausführungsform besitzen die beiden Segmente 211, 212 denselben Durchmesser. Dies ist nicht zwingend der Fall. Eines der Segmente kann auch einen kleineren Durchmesser als das andere Segment aufweisen. Insbesondere im Hinblick auf die verkippte Stellung des zweiten Elements 202 kann es beispielsweise zweckmäßig sein, wenn der Durchmesser des unteren in der Fig. 2b dargestellten Segments 211 kleiner ist als der des oberen Segments 212, so dass bei einer Ausgestaltung der inneren Oberfläche des zweiten Elements 202 als Kegelstumpf oder als Kegel (wie im Folgenden noch erläutert) ein ungehindertes Eingreifen bzw. Umschließen des Umlenkbereichs bewirkt werden kann.

In der Fig. 2b ist mit gestrichelten Linien der Umlenkbereich 240 gezeigt. Dies ist bevorzugt als der Bereich zu verstehen, in dem Produkte den von dem ersten Element 201 und dem zweiten Element 202 eingeschlossenen Bereich zumindest nicht in radialer Richtung verlassen können. Dieser Bereich wird dadurch gebildet, dass das zweite Element 202 das erste Element 201 von außen umgreift. Dies gilt unabhängig davon, ob das erste Element 201 als zwei kreisscheibenförmige Segmente 211, 212 umfassend ausgebildet ist oder als lediglich ein solches Segment oder eine andere Ausgestaltung umfassend realisiert ist. Insbesondere wird der Umlenkbereich 240 dadurch realisiert, dass sich das erste Element 201 im Umlenkbereich in den Innenraum des zweiten Elements 202 hinein erstreckt.

Zu diesem Zweck kann das zweite Element 202 etwa als im Wesentlichen hohler Zylinder ausgestaltet sein. Der hohle Zylinder besitzt eine innere Oberfläche 221. In einigen Ausführungsformen ist vorgesehen, dass diese als Oberfläche eines Kegelstumpfes, der nach unten hin (zu seiner Grundfläche mit größerem Durchmesser) geöffnet ausgestaltet ist, realisiert wird. Dies kann bevorzugt so realisiert werden, dass die Symmetrieachse dieses Kegelstumpfes mit der Rotationsachse $R_2$ zusammenfällt. Der Anstellwinkel der Seitenfläche der inneren, kegelstumpfförmigen Oberfläche des zweiten Elements 202 kann so gewählt sein, dass die Seitenfläche im Umlenkbereich zumindest teilweise parallel zur Rotationsachse $R_1$ verläuft oder mit dieser einen stumpfen Winkel oder einen spitzen Winkel einschließt. Dabei kann ein stumpfer Winkel, der größer als 90° aber kleiner als 180° ist, bevorzugt sein, da so ein unbeabsichtigtes Einklemmen von Produkten im Umlenkbereich vermieden wird.

Alternativ dazu kann die innere Oberfläche des zweiten Elements 202 auch als Zylinder oder Zylinderfläche ausgestaltet sein. Die Mantelfläche dieses Zylinders erstreckt sich dann parallel zur Rotationsachse $R_2$, so dass, wenn die Rotationsachse $R_2$ mit der Rotationsachse $R_1$ des ersten Elements 201 den hier dargestellten Winkel $\alpha$ einschließt, die innere Oberfläche des zweiten Elements 202 mit dem ersten Element 201 einen Winkel von 90° + $\alpha$ einschließt, was in jedem Fall ein stumpfer Winkel ist, sofern $\alpha$ ein spitzer Winkel ist.

Wie bereits oben beschrieben, kann, wenn das erste Element 201 als zwei kreisscheibenförmige Segmente 211, 212 umfassend ausgebildet ist, vorgesehen sein, dass diese Segmente unterschiedliche Durchmesser besitzen. In der hier dargestellten Ausführungsform, in der die innere Oberfläche des zweiten Elements 202 als kegelstumpfförmig ausgebildet ist, und sich dessen Mantelfläche parallel zur Rotationsachse $R_1$ erstreckt, ist es bevorzugt, wenn die Segmente 211, 212 denselben Durchmesser aufweisen, da diese dann zumindest in dem Umlenkbereich 240, in dem sich die innere Oberfläche des zweiten Elements und das erste Element am nächsten sind, ein möglichst vollständiges Abschließen bzw. nach oben hin und nach unten hin vollständiges Umschließen von Produkten 130 in dem Umlenkbereich bewirkt werden kann.

Alternativ kann auch vorgesehen sein, dass der Durchmesser des oberen Segments 212 von dem des unteren Segments 211 verschieden ist, was insbesondere bei Ausgestaltung der inneren Oberfläche des zweiten Elements 202 als Zylinderfläche sinnvoll sein kann. In einem solchen Fall kann, um einen möglichst vollständigen Abschluss bzw. eine vollständige Begrenzung des Bereichs 240 durch die zwei Segmente 211, 212 und das zweite Element 202 zu realisieren, der Durchmesser des oberen Segments 212 um einen Betrag $2\frac{h}{\tan\alpha}$ größer sein als der des unteren Segments 211. Hierbei ist h der Abstand der Segmente 211 und 212 und der Winkel $\alpha$ ist, bei Ausgestaltung der inneren Oberfläche des zweiten Elements 202 als Zylindermantel, gleich dem Winkel zwischen der Rotationsachse $R_2$ und der Rotationsachse $R_1$. Diese Bedingung muss nicht exakt erfüllt sein. Es kann auch vorgesehen sein, dass die Differenz der Durchmesser der Segmente 211, 212 10 % weniger oder 20 % weniger groß ist als der oben angegebene Wert. Damit wird ein zuverlässiges Ineinandergreifen des ersten Elements und des zweiten Elements auch bei großen Winkel $\alpha$ gewährleistet.

Während die äußere Gestalt des zweiten Elements 202 der Fig. 2b als Zylinder beschrieben wurde, ist dies nicht zwingend der Fall. Auch die äußere Oberfläche des zweiten Elements 202 kann beispielsweise als Kegelstumpf oder anders geformtes Element ausgestaltet sein, solange die innere Oberfläche so ausgestaltet ist, dass sie mit dem ersten Element 201 zusammen den Umlenkbereich 240 einschließen kann, um hierin Produkte in ihrer Bewegungsrichtung umzulenken.

Wie in der Fig. 2b schematisch dargestellt, treten die Produkte 130 zumindest mit einem Teil des ersten Elements 201 (hier zumindest dem unteren Segment 211) und einem Teil der inneren Oberfläche des zweiten Elements 202 in Kontakt. Bei der Bewegung durch den Umlenkbereich werden die Produkte aufgrund der in ihrem Inertialsystem wirkenden Zentrifugalkraft bzw. aufgrund ihrer eigenen Massenträgheit in radialer Richtung von der Rotationsachse $R_1$ bewegt. Diese Bewegung erfolgt soweit, bis die Produkte in dem Umlenkbereich von dem ersten Element und/oder dem zweiten Element an einer weiteren Bewegung in radialer Richtung gehindert werden.

Da es sich bei den Produkten um Lebensmittel handeln kann, kann es vorteilhaft sein, wenn die mit dem Produkt in Kontakt tretende Fläche des ersten Elements und des zweiten Elements eine von Bakterien und/oder Verunreinigungen nur schwierig zu benetzende Oberfläche aufweist. Beispielsweise kann die Oberfläche aus Edelstahl bestehen oder diese umfassen. Auch antibakteriell wirkende Kunststoffe oder Beschichtungen daraus sind für die innere Oberfläche des zweiten Elements 202 und/oder für die mit Produkten in Kontakt tretende Oberfläche des ersten Elements 201 denkbar. Es kann auch vorgesehen sein, dass die gesamte Oberfläche des ersten Elements und des zweiten Elements, umfassend sowohl die innere als auch die äußere Oberfläche, aus Edelstahl besteht oder damit beschichtet ist.

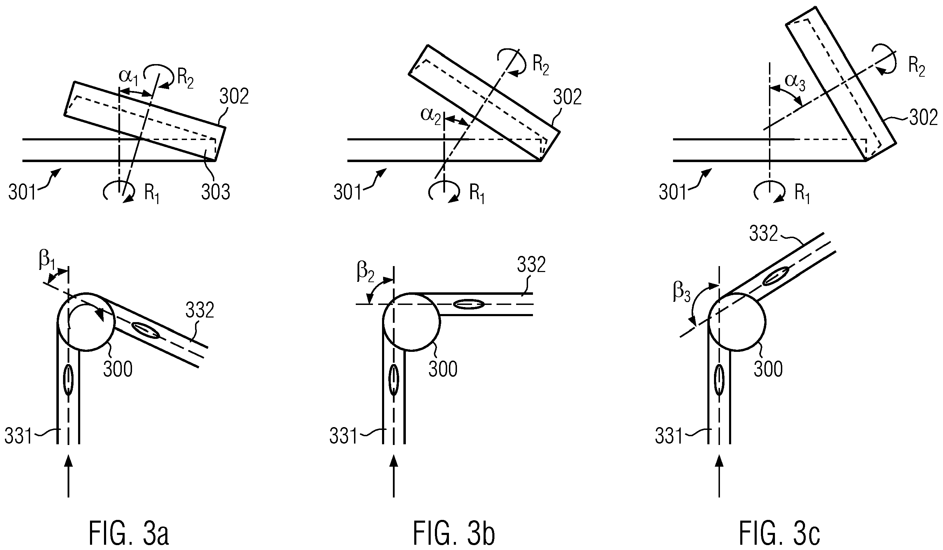

Die Fig. 3a bis 3c zeigen verschiedene relative Anordnungen des ersten Elements 301 und des zweiten Elements 302 zueinander sowie dazugehörige Darstellungen der vorgeschalteten Transporteinrichtung 331 und der nachgeschalteten Transporteinrichtung 332 und den von diesen eingeschlossenen Winkel.

Ganz allgemein gilt, dass, je kleiner der Winkel $\alpha$ zwischen den Rotationsachsen $R_1$ und der Rotationsachse $R_2$ ist, desto größer ist der von dem ersten Element und dem zweiten Element eingeschlossene Bereich und damit der Umlenkbereich gemessen als Anteil des Vollkreises. Dies bedeutet, dass auch der zwischen den Transportrichtungen der Transporteinrichtungen 331, 332 eingeschlossene Winkel kleiner ist, je kleiner der Winkel $\alpha$ ist.

In Fig. 3a ist eine Ausführungsform gezeigt, in der der zwischen den Rotationsachsen $R_1$ und $R_2$ eingeschlossene Winkel $\alpha_1$ klein ist, aber beispielsweise wenige Grad wie beispielsweise 10° oder 20° beträgt. Dadurch schließen das erste Element 301 und das zweite Element 302 einen vergleichsweise großen Bereich 303 derart ein, dass ein Produkt diesen Bereich in radialer Richtung nicht verlassen kann.

Damit ergibt sich ein Umlenkwinkel $\beta_1$, der angibt, unter welchem Winkel die Transportrichtung der Transporteinrichtung 331 und die Transportrichtung der Transporteinrichtung 332 stehen. Dieser Winkel ist in Fig. 3a vergleichsweise klein. Er hängt insbesondere auch von der Größe der Elemente ab.

In Fig. 3b ist der Winkel $\alpha_2$ größer als der Winkel $\alpha_1$. Der Winkel $\alpha_2$ kann hier so gewählt sein, dass der Winkel zwischen der Zuführrichtung in der ersten Transporteinrichtung 331 und der Abführrichtung in der Transporteinrichtung 332 genau 90° beträgt. Solche Ausgestaltungen können besonders bevorzugt sein, da eine Änderung der Bewegungsrichtung von Produkten um 90° in vielen Anwendungen vorteilhaft sein kann.

Fig. 3c zeigt eine weitere Ausführungsform, bei der der Winkel $\alpha_3$ zwischen Rotationsachse $R_1$ und Rotationsachse $R_2$ größer ist als der Winkel $\alpha_2$. In diesem Fall ist der von den Transportrichtungen eingeschlossene Winkel $\beta_3$ größer als der Winkel $\beta_2$ und auch größer als der Winkel $\beta_1$, so dass ein vergleichsweise geringes Umlenken von Produkten erzielt wird. Während ein solches Umlenken etwa durch V-förmige Transportbänder noch auf praktikable Weise realisiert werden könnte, kann durch Anwendung einer Umlenkeinrichtung entsprechend dieser Ausführungsform das Umlenken um den Winkel βa in einem vergleichsweise kleinen Raumbereich realisiert werden, was zu Einsparungen in den Transportwegen der Produkte führen kann.

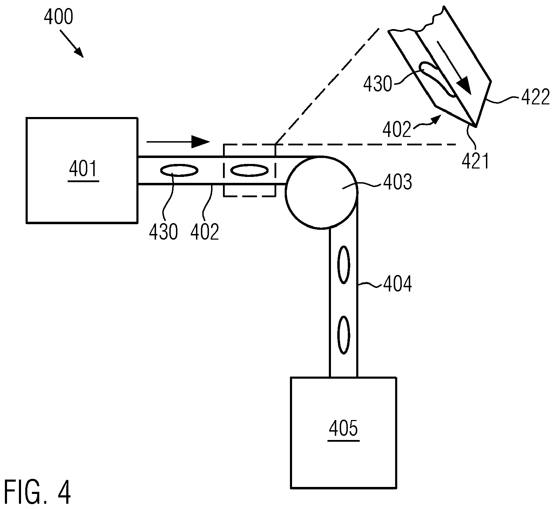

Fig. 4 zeigt eine Ausführungsform einer Verpackungsanlage unter Verwendung der Umlenkeinrichtung 403 entsprechend einer der obigen Ausführungsformen.

Die Verpackungsanlage 400 umfasst eine Behandlungsmaschine 401, aus der Produkte 430 in die erste Transporteinrichtung 402 stromaufwärts der Umlenkeinrichtung 403 übergeben werden können. Die Behandlungsmaschine 401 ist hinsichtlich der Art der Behandlung, die sie an Produkten durchführt, nicht beschränkt. Insbesondere kann es sich bei der Behandlungsmaschine jedoch um eine Zentrifuge handeln.

Nachdem die Produkte in die Transporteinrichtung 402 übergeben wurden, werden diese entsprechend der dargestellten Pfeilrichtung in Richtung der Umlenkeinrichtung 403 transportiert. In dieser werden sie umgelenkt und in die zweite Transporteinrichtung 404 übergeben. Von dieser aus können sie etwa einer Verpackungsmaschine oder einer anderen Behandlungsmaschine 405 zugeführt werden.

In der in Fig. 4 dargestellten Ausführungsform ist beispielhaft vorgesehen, dass die erste Transportrichtung 402 als V-förmiges Transportband 402 ausgestaltet ist. Dieses V-förmige Transportband umfasst zwei Transportriemen 421, 422, die in einem Winkel zueinander angeordnet sind, so dass sie eine Mulde einschließen, in der die Produkte 430 transportiert werden können. Der Winkel kann ein spitzer Winkel oder ein 90°-Winkel oder auch ein stumpfer Winkel sein. Beispielsweise können die Transportriemen 421, 422 einen Winkel von 90° miteinander einschließen.

Alternativ kann auch die zweite Transportrichtung 404 ein solches V-förmiges Transportband umfassen oder beide Transporteinrichtungen 402, 404 können ein solches V-förmiges Transportband umfassen.

Die Transporteinrichtungen 402, 404 sind jedoch nicht darauf beschränkt, dass sie ausschließlich Transportbänder und/oder im Speziellen V-förmige Transportbänder umfassen. Auch andere Ausgestaltungen sind hier denkbar, wie beispielsweise Gleitschienen für Produkte.

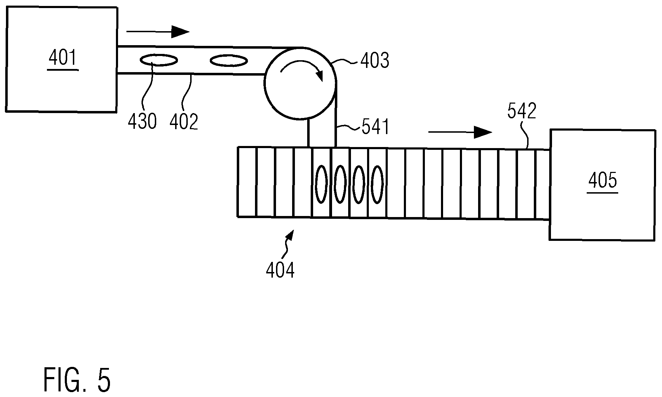

In der Fig. 5 ist eine verglichen mit der Fig. 4 abgewandelte Ausführungsform dargestellt. Die erste Behandlungsmaschine 401, die erste Transporteinrichtung 402, die Umlenkeinrichtung 403 und die zweite Behandlungsmaschine 405 können entsprechend der Fig. 4 ausgestaltet sein und werden hier nicht erneut beschrieben.

In dieser Ausführungsform umfasst die zweite Transporteinrichtung 404 stromab der Umlenkeinrichtung 403 zunächst einen Gleitbereich 541, in den die Produkte von der Umlenkeinrichtung übergeben werden und auf dem sie entlang der zweiten Transportrichtung gleiten. Dazu kann die Oberfläche dieses Gleitbereichs 541 beispielsweise aus poliertem Edelstahl bestehen oder diese umfassen. Der Gleitbereich kann auch in Transportrichtung abwärts geneigt sein, etwa um ein Aufstauen von Produkten zu vermeiden.

Stromab des Gleitbereichs 541 ist hier ein Fächerband 542 angeordnet, das die Produkte nacheinander aus dem Gleitbereich übernehmen kann. Dazu können in dem Fächerband etwa voneinander durch Erhebungen getrennte Mulden (Fächer) angeordnet sein, wobei die Mulden jeweils ein oder mehrere Produkte aufnehmen können. Hierdurch kann bereits eine (Vor-)Portionierung erfolgen. Das Fächerband transportiert die Produkte in der hier dargestellten Ausführungsform dann in einer dritten Transportrichtung zur Behandlungsmaschine 405 (entsprechend der dargestellten Pfeilrichtung). Die dritte Transportrichtung schließt dabei mit der zweiten Transportrichtung, entlang der sich Produkte im Gleitbereich bewegen, bevorzugt einen Winkel ein. Bevorzugt kann die dritte Transportrichtung quer zur zweiten Transportrichtung verlaufen bzw. senkrecht zu dieser sein.

**Patentansprüche**

1. Umlenkeinrichtung (100) für eine Transporteinrichtung zum Transportieren von Produkten (130), wobei die Umlenkeinrichtung ein erstes, um eine erste Drehachse drehbar gelagertes Element (101) und ein zweites, um eine zweite Drehachse drehbar gelagertes Element (102) umfasst, wobei die Drehachsen miteinander einen Winkel einschließen und das erste und das zweite Element in einem Bereich überlappen, sodass das erste und das zweite Element einen Umlenkbereich (240) einschließen, wobei ein dem Umlenkbereich zugeführtes Produkt in dem Umlenkbereich durch Drehung des ersten und zweiten Elements umgelenkt werden kann und nach Passieren des Umlenkbereichs aufgrund der Massenträgheit die Umlenkeinrichtung (100) verlassen kann.

2. Umlenkeinrichtung (100) nach Anspruch 1, wobei das erste Element (201) kreisscheibenförmig ist und das zweite Element (202) eine innere, kegelstumpfförmige Oberfläche (221) umfasst, wobei das erste Element in dem Umlenkbereich in die kegelstumpfförmige Oberfläche eingreift.

3. Umlenkeinrichtung (100) nach Anspruch 2, wobei das erste Element (201) zwei zueinander entlang der ersten Drehachse beabstandete, konzentrisch angeordnete, um die erste Drehachse drehbar gelagerte, kreisscheibenförmige Segmente (211, 212) umfasst, wobei ein Produkt zwischen den Segmenten aufgenommen und durch die Umlenkeinrichtung transportiert werden kann und wobei die kegelstumpfförmige Oberfläche (221) des zweiten Elements die beiden Segmente im Umlenkbereich (240) umschließt.

4. Umlenkeinrichtung (100) nach Anspruch 2 oder 3, wobei ein Winkel zwischen der ersten Drehachse und einer Seitenfläche der inneren, kegelstumpfförmigen Oberfläche (221) des zweiten Elements (202) in zumindest einem Teilbereich des Umlenkbereichs (240) zwischen 0° und 20°, bevorzugt zwischen 0° und 5° beträgt.

5. Umlenkeinrichtung (100) nach einem der Ansprüche 1 bis 4, wobei das erste Element (101) durch eine erste Antriebseinrichtung (111) zur Drehung um die erste Drehachse angetrieben wird und das zweite Element (102) durch eine von der ersten Antriebseinrichtung unabhängige, zweite Antriebseinrichtung (121) zur Drehung um die zweite Drehachse angetrieben wird.

6. Umlenkeinrichtung (100) nach Anspruch 5, wobei die erste Antriebseinrichtung (111) und die zweite Antriebseinrichtung (121) das erste Element (101) und das zweite Element (102) mit gleicher Drehzahl antreiben können.

7. Umlenkeinrichtung (100) nach einem der Ansprüche 1 bis 4, wobei das erste Element (101) und das zweite Element (102) durch eine gemeinsame Antriebseinrichtung zur Drehung um die ersten und die zweite Drehachse angetrieben werden.

8. Umlenkeinrichtung (100) nach einem der Ansprüche 1 bis 7, wobei das erste Element (101) und/oder das zweite Element (102) eine mit Produkt (130) in Kontakt kommende Oberfläche aus Edelstahl umfassen.

9. Umlenkeinrichtung (100) nach einem der Ansprüche 1 bis 8, wobei der von dem ersten Element (101) und dem zweiten Element (102) eingeschlossene Umlenkbereich (240) so ausgestaltet ist, dass ein Produkt, das in den Umlenkbereich entlang einer Zuführrichtung eintritt, den Umlenkbereich in einer Abführrichtung verlässt, wobei ein Winkel zwischen der Zuführrichtung und der Abführrichtung zwischen 45° und 135°, oder zwischen 60° und 120°, oder zwischen 85° und 95° beträgt.

10. Transportstrecke zum Transportieren von Produkten, wobei die Transportstrecke eine erste Transporteinrichtung (131) zum Transportieren von Produkten entlang einer ersten Transportrichtung, eine zweite Transporteinrichtung (132) zum Transportieren von Produkten entlang einer zweiten Transportrichtung und eine zwischen der ersten und der zweiten Transporteinrichtung angeordnete Umlenkeinrichtung (100) nach einem der Ansprüche 1 bis 9 umfasst, wobei die erste Transporteinrichtung (131) Produkte (130) der Umlenkeinrichtung (100) zuführen kann und die Umlenkeinrichtung Produkte von der ersten Transportrichtung in die zweite Transportrichtung umlenken und der zweiten Transporteinrichtung (132) zuführen kann.

11. Transportstrecke nach Anspruch 10, wobei die erste und/oder die zweite Transporteinrichtung ein V-förmiges Transportband umfassen.

12. Transportstrecke nach Anspruch 10 oder 11, wobei die zweite Transporteinrichtung (404) einen sich entlang der zweiten Transportrichtung erstreckenden Gleitbereich (541) zum Aufnehmen von Produkten aus der Umlenkeinrichtung (403) und ein Fächerband (542) stromab des Gleitbereichs umfasst, wobei Produkte von dem Gleitbereich in das Fächerband gelangen und in dem Fächerband entlang einer dritten Transportrichtung transportiert werden können.

13. Verpackungsanlange (400) zum Verpacken von Produkten, wobei die Verpackungsanlage eine Behandlungsmaschine (401) für Produkte und eine Verpackungsmaschine (405) zum Verpacken von Produkten und eine Transportstrecke nach einem der Ansprüche 10 bis 12 stromab der Behandlungsmaschine und stromauf der Verpackungsmaschine umfasst.

14. Verpackungsanlage (400) nach Anspruch 13, wobei die Behandlungsmaschine (401) eine Zentrifuge ist oder diese umfasst.

15. Verfahren zum Transportieren von Produkten (130), wobei die Produkte von einer ersten Transportrichtung in eine zweite Transportrichtung mittels einer Umlenkeinrichtung (100) nach einem der Ansprüche 1 bis 9 umgelenkt werden.

**Claims**

1. Diversion device (100) for a transport device for transporting products (130), where said diversion device comprises a first element (101) mounted to be rotatable about a first axis of rotation and a second element (102) mounted to be rotatable about a second axis of rotation, where said axes of rotation form an angle with one another and said first and said second element overlap in a region so that said first and said second element enclose a diversion region (240), where a product supplied to said diversion region can be diverted in said diversion region by rotating said first and said second element and can exit said diversion device (100) after having passed said diversion region due to mass inertia.

2. Diversion device (100) according to claim 1, where said first element (201) is circular disk-shaped and said second element (202) comprises an inner frustoconical surface (221), where said first element in said diversion region engages with said frustoconical surface.

3. Diversion device (100) according to claim 2, where said first element (201) comprises two circular disk-shaped segments (211, 212) which are arranged concentrically to one another and spaced from one another along said first axis of rotation and which are mounted to be rotatable about said first axis of rotation, where a product can be received between said segments and be transported through said diversion device and where said frustoconical surface (221) of said second element encloses said two segments in said diversion region (240).

4. Diversion device (100) according to claim 2 or 3, where an angle between said first axis of rotation and a lateral surface of said inner frustoconical surface (221) of said second element (202) in at least a partial region of said diversion region (240) is between 0° and 20°, preferably between 0° and 5°.

5. Diversion device (100) according to one of the claims 1 to 4, where said first element (101) is driven to rotate about said first axis of rotation by a first drive device (111) and said second element (102) is driven to rotate about said second axis of rotation by a second drive device (121) that is independent of said first drive device.

6. Diversion device (100) according to claim 5, where said first drive device (111) and said second drive device (121) can drive said first element (101) and said second element (102) at the same rotational speed.

7. Diversion device (100) according to one of the claims 1 to 4, where said first element (101) and said second element (102) are driven by a common drive device to rotate about said first and said second axis of rotation.

8. Diversion device (100) according to one of the claims 1 to 7, where said first element (101) and/or said second element (102) comprise a surface made of stainless steel which comes into contact with said product (130).

9. Diversion device (100) according to one of the claims 1 to 8, where said diversion region (240) enclosed by said first element (101) and said second element (102) is configured such that a product that enters said diversion region along a supply direction exits said diversion region in a discharge direction, where an angle between said supply direction and said discharge direction is between 45° and 135°, or between 60° and 120°, or between 85° and 95°.

10. Transport line for transporting products, where said transport line comprises a first transport device (131) for transporting products along a first direction of transport, a second transport device (132) for transporting products along a second direction of transport, and a diversion device (100) according to one of the claims 1 to 9 arranged between said first and said second transport device, where said first transport device (131) can supply products (130) to said diversion device (100) and said diversion device can divert products from said first direction of transport to said second direction of transport and supply them to said second transport device (132).

**11.** Transport line according to claim 10, where said first and/or said second transport device comprise a V-shaped conveyor belt.

**12.** Transport line according to claim 10 or 11, where said second transport device (404) comprises a sliding region (541) extending along said second direction of transport for receiving products from said diversion device (403) and a compartmentalized conveyor belt (542) downstream of the sliding region, where products pass from said sliding region to said compartmentalized conveyor belt and can be transported in said compartmentalized conveyor belt along a third direction of transport.

**13.** Packaging system (400) for packaging products, where said packaging system comprises a treatment machine (401) for products and a packaging machine (405) for packaging products and a transport line according to one of the claims 10 to 12 downstream of said treatment machine and upstream of said packaging machine.

**14.** Packaging system (400) according to claim 13, where said treatment machine (401) is or comprises a centrifuge.

**15.** Method for transporting products (130), where said products are diverted from a first direction of transport to a second direction of transport by way of a diversion device (100) according to one of the claims 1 to 9.

## Revendications

**1.** Dispositif de déviation (100) pour un dispositif de transport permettant de transporter des produits (130), dans lequel le dispositif de déviation comprend un premier élément (101) monté de manière à pouvoir tourner autour d'un premier axe de rotation et un second élément (102) monté de manière à pouvoir tourner autour d'un second axe de rotation, dans lequel les axes de rotation forment un angle entre eux et chevauchent les premier et second éléments au sein d'une région, de sorte que les premier et second éléments encerclent une région de déviation (240), dans lequel un produit acheminé dans la région de déviation peut être dévié au sein de la région de déviation par rotation des premier et second éléments et peut quitter le dispositif de déviation (100) en raison de l'inertie de masse après avoir traversé la région de déviation.

**2.** Dispositif de déviation (100) selon la revendication 1, dans lequel le premier élément (201) est en forme de disque circulaire et le second élément (202) comprend une surface intérieure tronconique (221), dans lequel le premier élément vient en prise avec la surface supérieure tronconique dans la région de déviation.

**3.** Dispositif de déviation (100) selon la revendication 2, dans lequel le premier élément (201) comprend deux segments (211, 212) en forme de disque circulaire espacés l'un de l'autre le long du premier axe de rotation, agencés de manière concentrique et montés de manière à pouvoir tourner autour du premier axe de rotation, dans lequel un produit peut être accueilli entre les segments et être transporté par le dispositif de déviation et dans lequel la surface tronconique (221) du second élément enveloppe les deux segments dans la région de déviation (240).

**4.** Dispositif de déviation (100) selon la revendication 2 ou 3, dans lequel un angle inscrit entre le premier axe de rotation et une surface latérale de la surface intérieure tronconique (221) du second élément (202) dans au moins une sous-région de la région de déviation (240) est compris entre 0° et 20°, de manière préférée entre 0° et 5°.

**5.** Dispositif de déviation (100) selon l'une quelconque des revendications 1 à 4, dans lequel le premier élément (101) est entraîné en rotation autour du premier axe de rotation par un premier dispositif d'entraînement (111) et le second élément (102) est entraîné en rotation autour du second axe de rotation par un second dispositif d'entraînement (121) indépendant du premier dispositif d'entraînement.

**6.** Dispositif de déviation (100) selon la revendication 5, dans lequel le premier dispositif d'entraînement (111) et le second dispositif d'entraînement (121) peuvent entraîner le premier élément (101) et le second élément (102) à la même vitesse de rotation.

**7.** Dispositif de déviation (100) selon l'une quelconque des revendications 1 à 4, dans lequel le premier élément (101) et le second élément (102) sont entraînés en rotation autour du premier et du second axe de rotation par un dispositif d'entraînement commun.

**8.** Dispositif de déviation (100) selon l'une quelconque des revendications 1 à 7, dans lequel le premier élément (101) et/ou le second élément (102) comprennent une surface en acier inoxydable en contact avec le produit (130).

9. Dispositif de déviation (100) selon l'une quelconque des revendications 1 à 8, dans lequel la région de déviation (240) entourée par le premier élément (101) et le second élément (102) est conçue de sorte qu'un produit entrant dans la région de déviation le long d'une direction d'alimentation quitte la région de déviation dans une direction d'évacuation, dans lequel un angle entre la direction d'alimentation et la direction d'évacuation est compris entre 45° et 135°, ou entre 60° et 120°, ou entre 85° et 95°.

10. Voie de transport permettant de transporter des produits, dans laquelle la voie de transport comprend un premier dispositif de transport (131) permettant de transporter des produits le long d'une première direction de transport, un second dispositif de transport (132) permettant de transporter des produits le long d'une deuxième direction de transport et un dispositif de déviation (100) selon l'une quelconque des revendications 1 à 9 agencé entre le premier et le second dispositif de transport, dans laquelle le premier dispositif de transport (131) peut acheminer des produits (130) jusqu'au dispositif de déviation (100) et le dispositif de déviation peut dévier des produits à partir de la première direction de transport jusque dans la deuxième direction de transport et les acheminer jusqu'au second dispositif de transport (132).

11. Voie de transport selon la revendication 10, dans laquelle le premier et/ou le second dispositif de transport comprennent une bande transporteuse en forme de V.

12. Voie de transport selon la revendication 10 ou 11, dans laquelle le second dispositif de transport (404) comprend une région de glissement (541) s'étendant le long de la deuxième direction de transport et permettant d'accueillir des produits en provenance du dispositif de déviation (403) et une bande en éventail (542) située en aval de la région de glissement, dans laquelle des produits venant de la région de glissement parviennent dans la bande en éventail et peuvent être transportés dans la bande en éventail le long d'une troisième direction de transport.

13. Installation de conditionnement (400) permettant de conditionner des produits, dans laquelle l'installation de conditionnement comprend une machine de traitement (401) destinée aux produits et une machine de conditionnement (405) destinée au conditionnement de produits et une voie de transport selon l'une quelconque des revendications 10 à 12 située en aval de la machine de traitement et en amont de la machine de conditionnement.

14. Installation de conditionnement (400) selon la revendication 13, dans laquelle la machine de traitement (401) est ou comprend une centrifugeuse.

15. Procédé de transport de produits (130), dans lequel les produits sont déviés à partir d'une première direction de transport jusque dans une deuxième direction de transport au moyen d'un dispositif de déviation (100) selon l'une quelconque des revendications 1 à 9.

FIG. 1

EP 4 023 575 B1

FIG. 2b

FIG. 2a

FIG. 3a

FIG. 3b

FIG. 3c

EP 4 023 575 B1

FIG. 4

FIG. 5

EP 4 023 575 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2353036 A1